## Europäisches Patentamt

## European Patent Office

## Office européen des brevets

(11) Veröffentlichungsnummer: **0 080 034**
**B1**

---

(12) **EUROPÄISCHE PATENTSCHRIFT**

---

(45) Veröffentlichungstag der Patentschrift:
**31.07.85**

(51) Int. Cl.⁴: **F 16 C 29/06**

(21) Anmeldenummer: **82108177.5**

(22) Anmeldetag: **04.09.82**

---

(54) **Kugelbüchse für unbegrenzte Längsbewegungen.**

---

(30) Priorität: **03.11.81 CH 7006/81**

(43) Veröffentlichungstag der Anmeldung:
**01.06.83 Patentblatt 83/22**

(45) Bekanntmachung des Hinweises auf die Patenterteilung:
**31.07.85 Patentblatt 85/31**

(84) Benannte Vertragsstaaten:
**DE FR GB IT SE**

(56) Entgegenhaltungen:
**CH - A - 527 378**
**DD - A - 134 667**
**DE - A - 2 328 180**
**DE - C - 1 575 608**
**US - A - 3 476 445**
**US - A - 3 512 849**
**US - A - 3 545 826**
**US - A - 3 751 121**

(73) Patentinhaber: **SRO Kugellagerwerke J. Schmid-Roost AG, Oerlikonerstrasse 70, CH-8050 Zürich (CH)**

(72) Erfinder: **Borel, Denis, Rosenbergstrasse 51, CH-8304 Wallisellen (CH)**

(74) Vertreter: **Rehmann, Klaus H., Postfach 1310 Hauptbahnhofstrasse, D-8720 Schweinfurt (DE)**

---

BUNDESDRUCKEREI BERLIN

## Beschreibung

Die vorliegende Erfindung bezieht sich auf eine Kugelbüchse für unbegrenzte Längsbewegungen, wobei die der Erfindung zugrundeliegende Kugelbüchse von wesentlich einfacherer Konstruktion als alle bekannten, vergleichbaren Kugelbüchsen ist.

Kugelbüchsen sind seit langem bekannt. Sie sind ständig weiterentwickelt worden und ersetzen heute die verschiedensten Arten von Längsführungen, seien es Gleitbüchsen, geschliffene, geschabte oder Rollenführungen. Kugelbüchsen bringen Vorteile — ähnlich wie bei Wälzlagern gegenüber z. B. Gleitlagern — wie geringe Reibung, Funktionssicherheit und lange Lebensdauer. Jedoch handelt es sich bei den heute bekannten und z. B. in den Patentschriften US-A-3 512 849, US-A-3 545 826 oder DE-C-1 575 608 und DE-A-2 328 180 beschriebenen Kugelbüchsen immer um relativ komplizierte Konstruktionen, bestehend aus mehreren und mit verschiedenen Verfahren, wie Drehen, Schleifen, Härten, Prägen, Umformen, Stanzen oder Spritzen, hergestellten und zusammenmontierten Einzelteilen. Einzig die benötigten Kugeln sind im Handel problemlos erhältlich.

Aus der CH-A-527 378 ist eine Kugelbüchse für unbegrenzte Längsbewegungen auf einer Welle bekannt, bestehend aus einer zylindrischen Hülse aus verformtem Material, in sich geschlossenen Kugelumläufen, bestehend aus zwei geraden und zwei, diese verbindenden, kurvenförmigen Teilstrecken, aus Kugeln und achsparallelen Stahlnadeln und zwar pro Kugelumlauf eine, so angeordnet, daß sie sich radial außerhalb einer der beiden geraden Teilstrecken eines Kugelumlaufes befindet.

Eine solche Kugelbüchse hat aber noch den Nachteil, daß viele Einzelteile und weitere Abstandsstücke für den inaktiven Abschnitt der Lagerbahn erforderlich sind, so daß sie aufwendig herzustellen und zusammenzubauen ist.

Aufgabe der vorliegenden Erfindung ist es, diese Nachteile zu eliminieren und eine Kugelbüchse vorzuschlagen, die die folgenden Merkmale aufweist:

— niedrige Herstellkosten durch Verringern der Anzahl der verwendeten Teile
— hohe Qualität, durch Verwendung handelsüblicher Präzisionsteile
— hohe Tragfähigkeit und Lebensdauer durch optimale Raumausnutzung.

Die Lösung dieser Aufgabe ist dem kennzeichnenden Teil des Anspruchs 1 zu entnehmen. Weitere vorteilhafte Ausführungen sind in den Ansprüchen 2 bis 6 enthalten.

Die erfindungsgemäße Kugelbüchse besteht nur noch aus einer einzigen, in einem Arbeitsgang geformten Hülse und aus im Handel als Norm- und Massenteile leicht erhältlichen Kugeln und Stahlnadeln, wie sie heute in jedem Kugel- oder Nadellager verwendet werden. Die Montage dieser drei Elemente erfolgt auf denkbar einfache Art uns Weise, d. h. durch Einlegen der Kugeln in die Umläufe der Hülse und Einschnappen der Stahlnadeln in die Halterungen, also ohne zusätzliche Arbeitsgänge, wie beispielsweise Verschweißen oder mechanische Umformungen und ohne zusätzliche Elemente, wie beispielsweise Seitenscheiben oder Federringe.

Die Erfindung soll anhand der nachfolgenden Figuren, die ein Ausführungsbeispiel darstellen, näher erläutert werden. Es zeigt

Fig. 1 eine Seitenansicht, teilweise geschnitten, der Kugelbüchse gemäß Erfindung,

Fig. 2 eine Vorderansicht, teilweise geschnitten, der Kugelbüchse gemäß Erfindung.

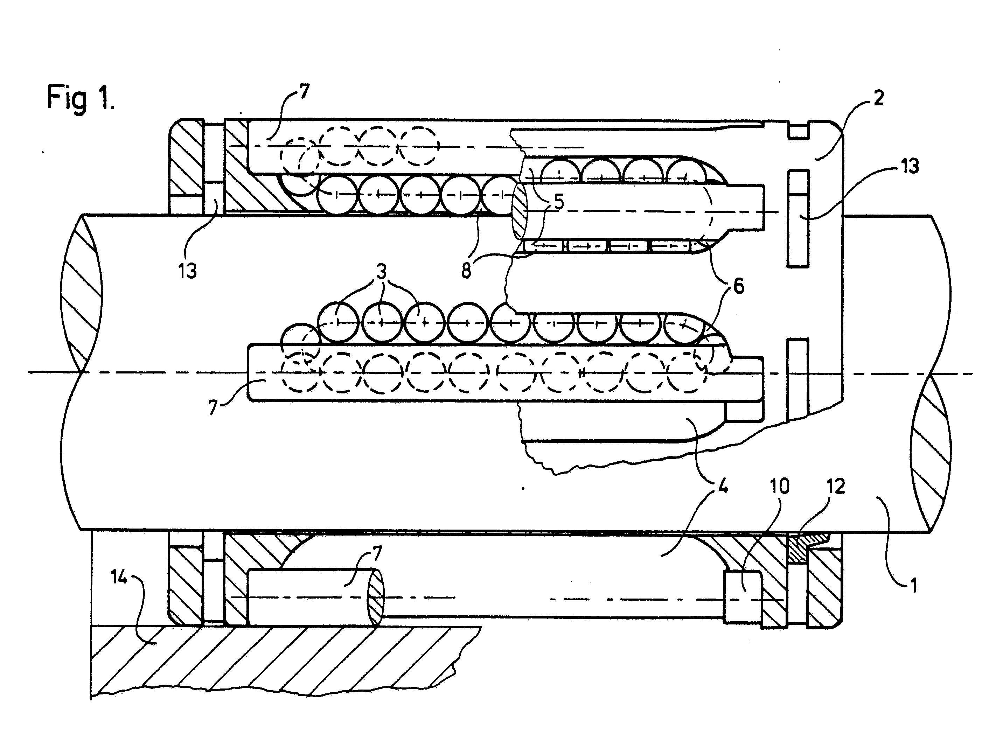

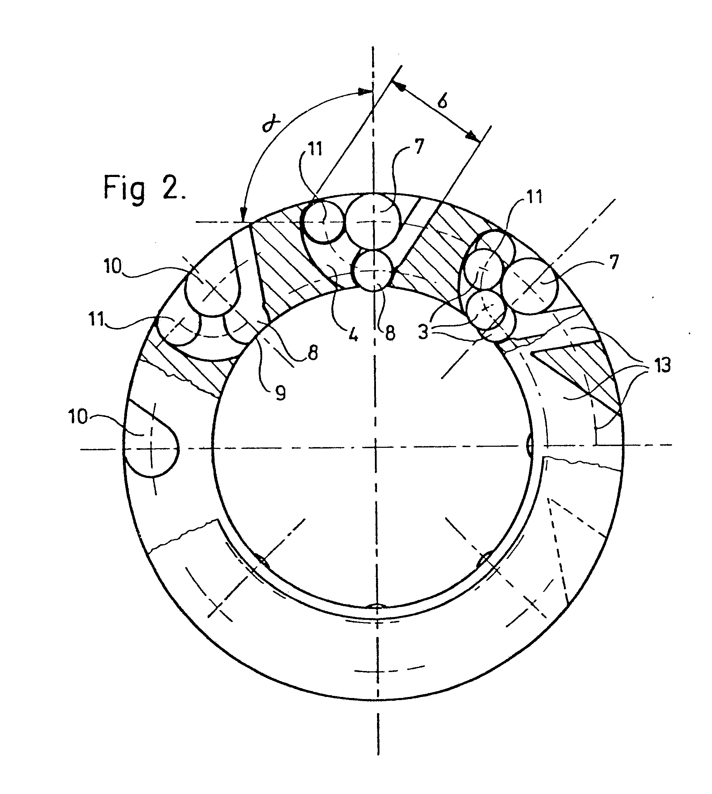

Eine Kugelbüchse gemäß Fig. 1 und 2 besteht nur aus Teileelementen, nämlich einer Hülse 2 aus Kunststoff und aus Kugeln 3, die durch die in die Hülse 2 eingearbeitete Form in sich geschlossene Kugelumläufe 4 bilden und aus zwei geraden Teilstrecken 5 bestehen, die an den Enden durch zwei kurvenförmige Teilstrecken 6 verbunden sind. Jedem Kugelumlauf 4 ist eine Stahlnadel 7 zugeordnet, die über der einen der beiden geraden Teilstrecken angebracht ist, so daß Welle 1, Kugeln 3, Nadel 7 und Gehäuse 14, in dem die Kugelbüchsen eingesetzt ist, in Kontakt stehen und so den Arbeitsbereich 8 bilden, wobei die Stahlnadeln 7 gleichzeitig als Rückhalt aller Kugeln 3 und als Laufbahn der tragenden Kugeln 3 dienen. Die Querschnittsform der Kugelumläufe 4 ist konkav. Die kurvenförmigen Teilstrecken 6 der Kugelumläufe 4 umschließen ca $^1/_4$ des Kreisumfangs einer Stahlnadel 7. Die Breite »b« ist kleiner als das Maß, gebildet aus zwei Kugeldurchmessern und dem Durchmesser einer Stahlnadel 7. Die Verbindungslinie, gezogen in Fig. 2 von der Achse einer Stahlnadel 7 zur Achse der Kugelbüchse, resp. zu der Achse der Welle 1, deckt sich mit der Verbindungslinie, gezogen von der Achse einer Stahlnadel 7 zum Zentrum der sich im Arbeitsbereich 8 befindenden Kugeln 3, und der Winkel $\gamma$, zwischen der Verbindungslinie Kugelzentrum der rücklaufenden Kugelreihe 11 und der Achse der Stahlnadel 7 und der Verbindungslinie Achse der Stahlnadel 7 und Zentrum der tragenden Kugelreihe im Arbeitsbereich 8, resp. Achse der Welle 1 beträgt ungefähr 90°. Die konkaven Einformungen der Kugelumläufe 4 durchbrechen die innere Wand der Hülse 2. Der dadurch entstandene Längsschlitz 9 bewirkt, daß einerseits die Kugeln 3 im Arbeitsbereich 8 Kontakt mit der Welle 1 haben, andererseits aber die Kugeln 3 bei nicht eingeschobener Welle 1 nicht nach innen herausfallen können. Die Stahlnadeln 7 sind in der Hülse 2 in als Schnappverschluß ausgebildeten Halterungen 10 am Ende jedes Kugelumlaufes 4, dessen Gesamtlänge kürzer als die der Stahlnadeln 7 ist, gehalten und geführt. Diese Halterungen 10 sind im selben Arbeitsgang hergestellt wie die übrige Form der Hülse 2, die vorzugsweise in Kunststoff, z. B. Polyacetal, als Spritzgußteil hergestellt wird.

Mit dem Einschnappen der Stahlnadeln 7 wird gleichzeitig verhindert — unterstützt durch die nach innen einfallende Formgebung der Kugelumlaufbahnen 4 — daß die Kugeln 3 der zurücklaufenden Kugelreihe 11 herausfallen.

In der Hülse 2 sind an beiden Enden, ebenfalls im gleichen Arbeitsgang hergestellt wie die übrige Form der Hülse 2, segmentartige Durchbrüche 13 zur Aufnahme von elastischen Dichtungen 12, die von innen her eingelegt werden, vorgesehen. In diesen segmentartigen Durchbrüchen 13 kann man sich auch, hier nicht dargestellt, einen entsprechend der Form der Durchbrüche innen verzahnten Spezialfederring, von außen montiert, zur axialen Fixierung der Kugelbüchse gegenüber dem Gehäuse 14 vorstellen.

Nicht dargestellt, aber ohne weiteres herstellbar, ist eine Variante mit achsparalleler, über die Gesamtlänge der Kugelbüchse sich erstreckender Öffnung, mit einem Öffnungswinkel zwischen 45 ° und 90°. Da die Hülse aus Kunststoff besteht, kann über deren Elastizität sowohl bei der geschlossenen, wie bei der offenen Variante jederzeit, falls wünschbar, das Radialspiel über eine flexibel gestaltete Gehäusewand 14 eingestellt werden.

### Patentansprüche

1. Kugelbüchse für unbegrenzte Längsbewegungen auf einer Welle, bestehend aus nur einer zylindrischen Hülse (2) aus verformtem Material, in sich geschlossenen Kugelumläufen (4), bestehend aus zwei geraden und zwei, diese verbindenden, kurvenförmigen Teilstrecken (5) bzw. (6), aus Kugeln (3) und achsparallelen Stahlnadeln (7) und zwar pro Kugelumlauf (4) eine, so angeordnet, daß sie sich radial außerhalb einer der beiden geraden Teilstrecken (5) eines Kugelumlaufes (4) befindet, dadurch gekennzeichnet, daß die geschlossenen Kugelumläufe (4) durch Ausnehmungen in der Hülse (2) geformt und die Kugeln (3) in diesen Kugelumläufen (4) immer, im Bereich der geraden Teilstrecken (5) entlang den Stahlnadeln (7) und im Bereich der kurvenförmigen Teilstrecken (6) um die Stahlnadeln (7) herum, geführt werden, und zwar so, daß die Zentren der Kugeln (3) eines Kugelumlaufes (4) immer den gleichen Abstand zu der Achse der zum Kugelumlauf (4) gehörenden Stahlnadel (7) haben.

2. Kugelbüchse nach Anspruch 1, dadurch gekennzeichnet, daß die kurvenförmigen Teilstrecken (6) eines Kugelumlaufes (4) ca. 1/4 des Kreisumfanges einer Stahlnadel (7) umschließen und im Querschnitt konkav ausgebildet sind, daß die Achsen der geraden Teilstrecken (5) eines Kugelumlaufes (4) zur Achse der Stahlnadel (7) immer den ungefähr gleichen Abstand aufweisen und daß alle Kugeln (3) eines Umlaufes (4) mit der Stahlnadel (7) immer in Kontakt bleiben.

3. Kugelbüchse nach Anspruch 1, dadurch gekennzeichnet, daß der Winkel $\gamma$ zwischen der Verbindungslinie Kugelzentrum der rücklaufenden Kugelreihe (11) und der Achse der Stahlnadel (7) und der Verbindungslinie Achse der Stahlnadel (7) und Zentrum der tragenden Kugelreihe (8) resp. Achse der Welle (1) ungefähr 90° beträgt.

4. Kugelbüchse nach Anspruch 1 und 2, dadurch gekennzeichnet, daß das Maß des Durchmessers der Kugeln (3) einen Wert aufweist, der zwischen 65% und 75% des Durchmessers der Stahlnadel (7) liegt.

5. Kugelbüchse nach Anspruch 1, dadurch gekennzeichnet, daß die Breite »b« der Kugelumläufe (4) kleiner ist, als das Maß, gebildet aus zwei Kugeldurchmessern und dem Durchmesser der Stahlnadel (7).

6. Kugelbüchse nach Anspruch 1 und 2, dadurch gekennzeichnet, daß die Hülse (2) an beiden Enden jedes Kugelumlaufes (4) Halterungen (10) für die Stahlnadeln (7) aufweist.

### Claims

1. A ball-bearing bushing for unlimited longitudinal movements along a shaft, said bushing consisting of a single cylindrical sleeve (2) made of formed material and closing ball tracks (4) in the form of two straight sections (5) united by two curved sections (6), each track containing a plurality of balls (3) and a single axially parallel steel needle (7), arranged in such a manner that the neddle is located radially above one of the two straight sections (5) of a ball track, characterized in that the closed ball tracks (4) are formed by recesses in the sleeve (2), the balls (3) being at all times guided by the steel needles (7) in the straight sections of the track (5) and in the curved sections of the track (6) being guided around the said needles (7), in such a manner that the centres of the balls (3) in one track (4) are at all times at about the same distance from the centre of the steel needle (7) in that track (4).

2. A ball-bearing bushing according to claim 1, characterized in that: the curved sections (6) of the ball tracks (4) enclose about one quarter of the circumference of a steel needle (7) and are of concave cross-section; the axes of the straight sections (5) of a ball track (4) are at all times at about the same distance from the axis of the steel needle (7); and all of the balls (3) in a track (4) are at all times in contact with the steel needle (7).

3. A ball-bearing bushing according to claim 1, characterized in that: the angle $\alpha$ between the line connecting the centres of the balls in the returning row (11) and the centre of the steel needle (7), and the line connecting the centre of a steel needle (7) and the centres of balls in the load-carrying row (8) or the longitudinal axis of the shaft (1) is about 90°.

4. A ball-bearing bushing according to claim 1 or 2, characterized in that the diameter of the balls (3) is between 65% and 75% of that of the steel needles (7).

5. A ball-bearing bushing according to claim 1, characterized in that the width »b« of the ball tracks (4) is less than the sum of two ball-diameters and the diameter of a steel needle.

6. A ball-bearing bushing according to claim 1 or 2, characterized in that the sleeve (2) includes mountings (10) for the steel needles (7) arranged at each end of each ball track (4).

## Revendications

1. Elément de guidage pour déplacement linéaire illimité sur un arbre (1) comprenant un manchon tubulaire en matière moulée (2), des billes (3) étant disposées dans des circuits fermés (4) de circulation formés de deux portions longitudinales (5) reliées à leurs extrémités par des portions courbes (6), des aiguilles en acier (7) parallèles à l'axe de l'élément étant placée à raison d'une aiguille (7) par circuit (4) radialement en regard d'une des deux portion longitudinale des dits circuits, ces dites portions (9) crevant outre l'élément caractérisé en ce que les circuits fermés (4) de circulation de billes (3) sont formés par des empreintes dirigées obliquement, les billes (3) de ces dits circuits (4) étant toujours maintenues près des aiguilles correspondant à chaque circuit (4), contounant ces dites aiguilles (7) à l'endroit des portions courbes (6) des dits circuits (4) de tel façon que les centres des dites billes (3) restent toujours à la même distance de l'axe des dites aiguilles (7).

2. Elément selon la revendication 1, caractérisé en ce que les portions du circuit (4) en forme de courbe (6) sont incurvées contre environ le $1/4$ de la circonférence de l'aiguille d'acier (7), le fond de ces dites courbes (6) vu en coupe radiale étant concave, la distance séparant l'axe des portions longitudinales (5) du circuit (4) à l'axe de l'aiguille d'acier (7) du dit circuit (4) restant toujours sensiblement identique, la totalité des billes (3) du circuit (4) étant toujours en contact avec l'aiguille (7) correspondant au dit circuit (4).

3. Elément selon la revendication 1 caractérisé en ce que l'angle $\alpha$ défini par la rectiligne passant par le centre des billes (3) situées dans le retour (11) des circuits (4) et le centre de l'aiguille d'acier (7) d'une part et la rectiligne passant par le centre de l'aiguille d'acier (7), le centre des billes (3) situées dans la zone de charge (8) respectivement le centre de l'arbre (1) de l'élément d'autre part a une valeur d'environ 90°.

4. Elément selon la revendication 1 et 2, caractérisé en ce que le diamètre des billes (3) à une valeur comprise entre le 65% et le 75% du diamètre des aiguilles d'acier (7).

5. Elément selon la revendications 1 caractérisé en ce que la largueur »b« des circuits (4) de circulation de billes (3) est plus petite que la valeur de deux diamètres de bille (3) additionnés au diamètre d'une aiguille d'acier (7).

6. Elément selon la revendication 1 caractérisé en ce que les circuits (4) de circulation de billes (3) comportent à leurs deux extrémités un logement (10) servant à la fixation des aiguilles d'acier (7).

Fig 1.

Fig 2.